# EUROPÄISCHE PATENTSCHRIFT

(11) **EP 3 571 102 B1**
(45) Veröffentlichungstag und Bekanntmachung des Hinweises auf die Patenterteilung: **22.12.2021**
(21) Anmeldenummer: 18700990.7
(22) Anmeldetag: 11.01.2018
(51) Int. Cl.: B60T 8/17

(54) **VERFAHREN ZUR VERZÖGERUNG EINES ANHÄNGEFAHRZEUGS, RADMODUL ZUR DURCHFÜHRUNG DES VERFAHRENS SOWIE FAHRZEUGKOMBINATION MIT EINEM SOLCHEN RADMODUL**
METHOD FOR DECELERATING A TRAILER VEHICLE, WHEEL MODULE FOR PERFORMING THE METHOD AND VEHICLE COMBINATION HAVING A WHEEL MODULE OF THIS TYPE
PROCÉDÉ POUR RALENTIR UN VÉHICULE TRACTÉ, MODULE DE ROUE POUR METTRE EN UVRE LE PROCÉDÉ AINSI QU'ENSEMBLE DE VÉHICULES COMPRENANT UN TEL MODULE DE ROUE

(30) Priorität: 21.01.2017 DE 102017000547
(43) Veröffentlichungstag der Anmeldung: 27.11.2019
(73) Patentinhaber: ZF CV Systems Europe BV, 1170 Brussels (BE)
(72) Erfinder: THA, Ingo, 31275 Lehrte (DE)
(74) Vertreter: Rabe, Dirk-Heinrich
(86) Internationale Anmeldenummer: PCT/EP2018/050687
(87) Internationale Veröffentlichungsnummer: WO 2018/134117

(56) Entgegenhaltungen:
- WO-A1-2008/124073
- WO-A2-2004/000578
- DE-A1-102009 008 342
- DE-A1-102011 089 534
- GB-A- 2 509 791

## Beschreibung

Die Erfindung betrifft ein Verfahren zur Verzögerung eines Anhängefahrzeugs gemäß dem Oberbegriff des Anspruchs 1. Die Erfindung betrifft außerdem gemäß Anspruch 7 ein Radmodul zur Durchführung des Verfahrens. Außerdem betrifft die Erfindung eine Fahrzeugkombination mit einem Kraftfahrzeug und wenigstens einem Anhängefahrzeug gemäß dem Oberbegriff des Anspruchs 10.

Moderne Nutzfahrzeuge mit pneumatisch betätigbaren Radbremsen weisen in der Regel eine elektronische Bremssteuereinheit auf, welche unter anderem zur Umsetzung von Fahrstabilitätsfunktionen auf die individuelle Einstellung des Bremsdrucks einwirken kann. Bei elektronischen Bremsanlagen (EBS) wird die Steuerung als elektrisches Signal in der Steuerübertragung erzeugt und verarbeitet. Dabei kommen bevorzugt elektronische Bremssysteme zum Einsatz mit dreikanaligen oder vierkanaligen Systemen, bei denen der Bremsdruck der einzelnen Räder oder Achsen unabhängig voneinander geregelt werden kann. Unabhängig von elektronischen Bremsanlagen (EBS) können Bremsanlagen mit Antiblockiersystemen (ABS) ergänzt sein, welche bei Erkennen einer Blockierneigung das Blockieren der Räder beim Bremsen verhindert und dabei die Lenkbarkeit und die Fahrstabilität erhält. Bei jeder Bremsung kann nämlich nur eine dem Fahrbahnreibwert entsprechende Bremskraft genutzt werden. Übersteigt die eingesteuerte Bremskraft die maximal übertragbare Bremskraft an einem oder mehreren Rädern, beginnen diese zu blockieren, wodurch das Kraftfahrzeug instabil werden kann. Ein Antiblockiersystem überwacht üblicherweise über Messsignale von Drehzahlsensoren die Drehzahl jedes Rades und ermittelt daraus den jeweiligen Radschlupf. Dies kann beispielsweise durch Vergleich der aus der Raddrehzahl ermittelten Radgeschwindigkeit mit einer (errechneten) Fahrzeugreferenzgeschwindigkeit erfolgen. Wird aus der Auswertung der Messsignale der Drehsensoren eine Blockierneigung eines Rades erkannt, das heißt eine Schlupfgrenze ist erreicht oder überschritten, übernimmt die Bremssteuereinheit die Kontrolle über die Einstellung des Bremsdrucks.

Bei Fahrzeugkombinationen, das heißt einer Kombination von einem motorisierten Zugfahrzeug und wenigstens einem Anhängefahrzeug, stellt das Zugfahrzeug über einen pneumatischen Kupplungskopf einen Anhängerbremsdruck bereit, welcher in der Bremsanlage des Anhängefahrzeugs auf die Radbremsen des Anhängefahrzeugs wirkt. Bei einer Verzögerung, das heißt einem Abbremsen einer Fahrzeugkombination, insbesondere mit Steuereingriffen einer Bremssteuereinheit, sollte immer auch das Anhängefahrzeug gebremst werden, um die Fahrzeugkombination zu strecken beziehungsweise ein Aufschieben des Anhängefahrzeugs auf das Zugfahrzeug zu vermeiden. Sofern das Anhängefahrzeug mit einem Antiblockiersystem ausgerüstet ist, verhindert dieses ein Blockieren der Räder des Anhängefahrzeugs, auch wenn der Anhängerbremsdruck höher ist, als die Räder und die darauf aufgezogenen Reifen bei dem entsprechenden Fahrbahnreibwert übertragen können. Das Blockieren eines oder mehrerer Räder könnte zu einem Schleudern oder Ausbrechen des Anhängefahrzeugs führen ("trailer swing"),

Obwohl moderne Anhängefahrzeuge meist mit Antiblockiersystemen ausgestattet sind, werden nach wie vor viele Anhängefahrzeuge ohne Antiblockiersystem eingesetzt. Anhängefahrzeuge ohne Antiblockiersysteme sind besonders in nichteuropäischen Ländern verbreitet.

Ist das Anhängefahrzeug nicht mit einem Antiblockiersystem ausgerüstet oder ein gegebenenfalls vorhandenes Antiblockiersystem ist im Betrieb ausgefallen, muss der einzustellende Anhängerbremsdruck abgeschätzt werden. Von keinem der Räder des Anhängefahrzeugs liegen Informationen vor und es muss daher versucht werden, den am pneumatischen Kupplungskopf ausgesteuerten Anhängerbremsdruck so zu wählen, dass einerseits möglichst keine Räder blockieren aber andererseits ausreichend Anhängerbremsdruck ausgesteuert wird, um ein Aufschieben des Anhängefahrzeugs und Einknicken der Fahrzeugkombination (sog. "Jackknifing") zu vermeiden. Informationen über Beladung und Fahrbahnreibwert sind nicht immer, beziehungsweise nur mit begrenzter Genauigkeit vorhanden. Insbesondere bei Fahrzeugkombination mit Deichsel- oder Zentralachsanhängern ist bei Teilbeladung oft die Verteilung der Beladung auf das Zugfahrzeug oder den Anhänger unklar, was ebenfalls die Einstellung eines geeigneten Anhängerbremsdrucks erschwert beziehungsweise unmöglich macht. Vor diesem Hintergrund ist die Abschätzung eines geeigneten Anhängerbremsdrucks in der Regel sehr schwierig.

Das Dokument DE 10 2011 089534 A1 offenbart ein Verfahren zur Erkennung einer Drehzahlanormalität zumindest eines Rades einer Fahrzeug-Anhänger-Kombination, wobei ermittelte Raddrehzahlsignale an eine am Zugfahrzeug angeordnete Empfangseinrichtung zur weiteren Verarbeitung drahtlos ausgesendet werden.

Der vorliegenden Erfindung liegt die Aufgabe zugrunde, dem Schleudern oder dem Aufschieben eines Anhängefahrzeugs ohne Antiblockiersystem auf das vorausfahrende Fahrzeug während eines Verzögerungsvorgangs mit geringem Aufwand zum Ausrüsten der Fahrzeuge entgegenzuwirken.

Diese Aufgabe wird erfindungsgemäß durch ein Verfahren zur Verzögerung eines Anhängefahrzeugs mit den Merkmalen des Anspruchs 1 gelöst. Die Aufgabe wird außerdem gemäß Anspruch 7 durch ein Radmodul zur Durchführung des Verfahrens gelöst. Ferner wird die Aufgabe durch eine Fahrzeugkombination mit einem Kraftfahrzeug und wenigstens einem Anhängefahrzeug mit den Merkmalen des Anspruchs 10 gelöst.

Gemäß der Erfindung werden an einem oder mehreren Rädern des Anhängefahrzeugs mittels eines Radmoduls Beschleunigungsmesswerte des jeweiligen Rades ermittelt und unter Berücksichtigung der Beschleunigungsmesswerte ein lnformationssignal erzeugt. Die Informationssignale werden drahtlos gesendet und auf diesem Weg einer elektronischen Bremssteuereinheit zugeleitet. Hierzu ist der Bremssteuereinheit ein Empfänger zum Empfang von Informationssignalen der Radmodule zugeordnet, wobei die Bremssteuereinheit dazu ausgebildet ist, den Anhängerbremsdruck, welcher wenigstens auf die Radbremse desselben Rades wie das sendende Radmodul wirkt, in Abhängigkeit der empfangenen lnformationssignale einzustellen. Dabei werden die Beschleunigungsmesswerte bewertet und im Hinblick auf eine Blockiertendenz überwacht, wobei die Bremssteuereinheit durch entsprechende Anpassung des Anhängerbremsdrucks einer Blockiertendenz eines Rades im Sinn einer Steuerung oder Regelung des Anhängerbremsdrucks entgegenwirkt.

Das erfindungsgemäße Radmodul ist eine Baugruppe eines modularen Bremssystems, welche mit einfachen Mitteln an einem Rad eines Anhängefahrzeugs montiert werden kann, beispielsweise an der Felge angebracht werden kann. Das Radmodul umfasst dabei einen an die radiale und/oder die tangentiale Beschleunigung des Rades gekoppelten Beschleunigungssensor und eine Modulelektronik, welche zur Erzeugung des Informationssignals unter Berücksichtigung der vom Beschleunigungssensor ermittelten Beschleunigungsmesswerte ausgebildet ist. Die erfassten Beschleunigungsmesswerte umfassen dabei Information zur Beschleunigung des betreffenden Rades des Anhängefahrzeugs in radialer und/oder tangentialer Richtung. Schließlich weist das erfindungsgemäße Radmodul eine Sendeeinrichtung zum drahtlosen Versenden des Informationssignals auf. Ein derartiges Radmodul kann als kompakte Baugruppe leicht an bestehenden Anhängefahrzeugen nachgerüstet werden, so dass auch bei Anhängefahrzeugen ohne Antiblockiersystemen oder bei Ausfall eines gegebenenfalls vorhandenen Antiblockiersystems eine Überwachung der Blockierneigung einzelner Räder möglich ist.

Die Bewertung und Überwachung im Hinblick auf eine Blockiertendenz des jeweiligen Rades wird durch einen Algorithmus realisiert, welcher einer Auswertungselektronik implementiert ist. Zur Auswertung der Beschleunigungsmesswerte können Algorithmen herangezogen werden, wie sie beispielsweise in bereits bekannten Antiblockiersystemen für ähnliche Auswertungszwecke Anwendung finden. Durch die Berücksichtigung der mittels Radmodulen ermittelten Blockiertendenzen der Räder ist je nach Ausführungsform eine Steuerung oder eine Regelung des Anhängerbremsdrucks gegeben. Die Qualität der von der Bremssteuereinheit des Zugfahrzeugs durchgeführten Bremsdruckregelung für das Anhängefahrzeug dürfte die Qualität von Antiblockiersystemen zwar prinzipbedingt nicht erreichen. Gleichwohl ist mit einfachen Mitteln eine deutliche Verbesserung der Bremssituation für Anhängefahrzeuge ohne Antiblockiersysteme und entsprechende Ausrüstung gegeben und einem Schleudern bzw. Ausbrechen sowie einem Aufschieben derartiger Anhängefahrzeuge auf das vorausfahrende Fahrzeug entgegengewirkt.

In einer vorteilhaften Ausführungsform der Erfindung weist jedes Rad eines Anhängefahrzeugs der Fahrzeugkombination ein Radmodul auf, so dass die Blockiertendenz jedes Rad überwachbar ist. Werden die Radbremsen des Anhängefahrzeugs aus einem gemeinsamen Bremskreis mit einem gemeinsamen Anhängerbremsdruck beaufschlagt, so ist über die Einstellung des Anhängerbremsdrucks ein einkanaliges Antiblockiersystem gegeben.

In einer Ausführungsform der Erfindung werden die Beschleunigungsmesswerte über das Informationssignal drahtlos gesendet, wobei die Auswertung und Überwachung der Blockiertendenz der jeweiligen Räder zentral in der Peripherie der Bremssteuereinheit erfolgt. In besonders bevorzugter Ausführungsform der Erfindung ist jedoch die Auswertungselektronik zur Überwachung der Beschleunigungsmesswerte Teil der Modulelektronik und ist mit der Sendeeinrichtung des Radmoduls verbunden. Die Beschleunigungsmesswerte werden somit direkt im Radmodul bewertet und dabei qualitativ eine Blockiertendenz des jeweiligen Rades ermittelt. Entsprechend der Bewertung der Beschleunigungsmesswerte und der dabei ermittelten Blockiertendenz werden entsprechende Informationssignale erzeugt und drahtlos gesendet. Das Radmodul ist somit eine aktive Baugruppe, welche mit einfachen Mitteln an einem Rad montierbar ist. Die moduleigene Elektronik ermittelt Informationen über die Blockiertendenz des jeweils überwachten Rades und sendet sie schließlich drahtlos, so dass die Information von einer Bremssteuereinheit im Zugfahrzeug berücksichtigt werden kann. In einem Zugfahrzeug wird der Bremssteuereinheit ein Empfänger zum drahtlosen Empfang der Informationssignale zugeordnet. Der Empfänger ist dabei auf die drahtlose Kommunikationstechnologie der Radmodule abgestimmt.

In einer weiteren vorteilhaften Ausführungsform bestimmt das Radmodul in Abhängigkeit der Bewertung der Beschleunigungsmesswerte eine Druckveränderung des Anhängerbremsdrucks entsprechend der festgestellten Blockiertendenz. Die zu Vermeidung eines Blockierens des Rades des Anhängefahrzeugs erforderliche Druckveränderung fordert das Radmodul bei der Bremssteuereinheit über das Informationssignal an. Anders ausgedrückt erzeugt das Radmodul ein Informationssignal, dessen Information eine gewünschte Änderung des Anhängerbremsdrucks ist, welcher von der Bremssteuereinheit am pneumatischen Kupplungskopf des Zugfahrzeugs bereitgestellt werden soll. Die Bremssteuereinheit stellt den Anhängerbremsdruck am Kupplungskopf entsprechend der angeforderten Druckänderung ein.

Die ermittelte und von der Bremssteuereinheit angeforderte Druckänderung ist in einer vorteilhaften Ausführungsform eine qualitativ bestimmte Tendenz zur Veränderung des Bremsdrucks ähnlich der Ansteuerung von ABS-Ventilen, also beispielsweise eine Anforderung zur Druckerhöhung oder zum Entlüften, also zum Senken des Bremsdrucks. In einer weiteren vorteilhaften Ausführungsform bestimmt das Radmodul direkt einen gewünschten Sollbremsdruck, welcher über das Informationssignal angefordert wird und von der Bremssteuereinheit bei Empfang des Informationssignals eingestellt werden soll. Empfängt die Bremssteuereinheit Informationssignale mehrerer Radmodule, so wird nach einer vorgegebenen Bewertungsanweisung eine der angeforderten Druckänderungen umgesetzt oder einer der angeforderten Sollbremsdrücke eingestellt.

In der besonders bevorzugten Ausführungsform der Erfindung senden die Radmodule Informationssignale nur im Fall der Ermittlung einer qualitativ vorgegebenen Blockiertendenz. Dabei wird das Ergebnis der Bewertung der Beschleunigungsmesswerte und der damit errechneten Blockiertendenz mit einer Vorgabe verglichen und lediglich bei Unterschreiten oder Überschreiten der so vorgegebenen Schwellwerte ein Informationssignal für die Bremssteuereinheit erzeugt, damit der Anhängerbremsdruck angepasst wird. Auf diese Weise wird der Energiebedarf des aktiven Radmoduls reduziert und dadurch die Energieversorgung über eine Batterie geschont. Sobald eine qualitative Blockiertendenz ermittelt wird, das heißt eine vorgegebene Schwelle erreicht oder überschritten ist, wird ein entsprechendes Informationssignal gesendet. In einer Ausführungsform der Erfindung ist das Überschreiten einer Schwelle für eine negative Radbeschleunigung vorgesehen. Alternativ oder zusätzlich wird überwacht, ob eine Radschlupf-Schwelle überschritten ist, das heißt, dass das Rad nahe am Blockieren ist oder bereits blockiert. Außerdem oder alternativ ist die Vorgabe einer Schwelle für die positive Radbeschleunigung vorgesehen, welche insbesondere beim Anlaufen eines Rades wirksam ist.

Je nach Ausführung der Bremsanlage werden unter Berücksichtigung der Informationssignale der Radmodule die Bremsdrücke an den Radbremsen des Anhängefahrzeugs einzeln, achsweise oder ein allen Radbremsen gemeinsamer Anhängerbremsdruck eingestellt.

In der bevorzugten Ausführungsform der Erfindung ist in einer Fahrzeugkombination der elektronischen Bremssteuereinheit des Zugfahrzeugs ein Empfänger zum Empfang von Informationssignalen des mindestens einen Radmoduls zugeordnet ist. wobei die elektronische Bremssteuereinheit (34) dazu ausgebildet ist, den Anhängerbremsdruck (14) in Abhängigkeit der empfangenen Informationssignale (21) einzustellen.

Ausführungsbeispiele der Erfindung sind nachstehend anhand der Zeichnung näher erläutert. Es zeigen:
- Fig. 1: eine schematisch dargestellte Bremsanlage eines Ausführungsbeispiels einer Fahrzeugkombination mit Zugfahrzeug und einem Anhängefahrzeug,
- Fig. 2: ein Flussschaubild eines Ausführungsbeispiels eines Verfahrens zur Verzögerung einer Fahrzeugkombination mit Zugfahrzeug und Anhängefahrzeug gemäß Fig. 1.

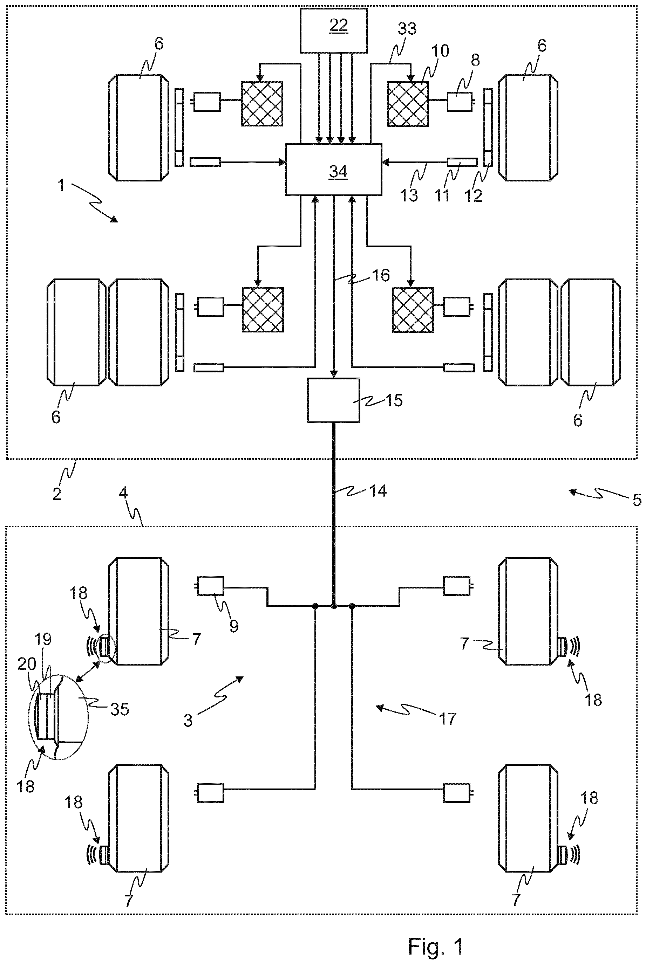

Fig. 1 zeigt einen elektrisch-pneumatischen Plan der Bremsanlage 1 eines Zugfahrzeugs 2, nämlich eines Nutzfahrzeugs, und einer Bremsanlage 3 eines Anhängefahrzeugs 4. Das Zugfahrzeug 2 und das Anhängefahrzeug 4 bilden eine Fahrzeugkombination 5, in welcher das Zugfahrzeug 2 motorisiert ist und das Anhängefahrzeug 4 zieht. Die Bremsanlage 3 des Anhängefahrzeugs 4 wird zur Durchführung einer Bremsung von der Bremsanlage 1 des Zugfahrzeugs 2 in nachstehend beschriebener Weise aktiviert.

Sowohl den Rädern 6 des Zugfahrzeugs 2 als auch den Rädern 7 des Anhängefahrzeugs 4 sind jeweils pneumatisch betätigbare Radbremsen 8,9 zugeordnet. Die Radbremsen 8,9 verzögern das ihnen jeweils zugeordnete Rad 6, 7 unter der Wirkung eines Bremsdrucks. In der Bremsanlage 1 des Zugfahrzeugs 2 wird die Einstellung des Bremsdrucks an den jeweiligen Radbremsen 8 von einer Bremssteuereinheit 34 überwacht. Jedem Rad 6 des Zugfahrzeugs ist ein Drucksteuerventil 10 zugeordnet, welches von der Bremssteuereinheit 34 individuell ansteuerbar ist. Über eine entsprechende Ansteuerung des jeweiligen Drucksteuerventils 10 kann die Bremssteuereinheit 34 dem Bremsdruck an jedem Draht 6 des Zugfahrzeugs 2 individuell einregeln. Im gezeigten Ausführungsbeispiel sind die Bremssteuereinheit 34 und die Drucksteuerventile 10 wesentliche Elemente eines Antiblockiersystems, zu dem auch Drehzahlsensoren 11 an den jeweiligen Rändern 6 gehören. Die Drehzahlsensoren 11 wirken mit einem Polrad 12 zusammen, welches an dem jeweiligen Rad 6 des Zugfahrzeugs 2 montiert ist und mit diesem umläuft. Der Drehzahlsensor 11 ist elektrisch mit der Bremssteuereinheit 34 verbunden und teilt der Bremssteuereinheit 34 laufend die von ihm erfassten Drehzahlmesswerte 13 mit.

Über die Drehzahlmesswerte 13 ermittelt die Bremssteuereinheit 34 den Radschlupf am jeweiligen Rad 6. Dies kann beispielsweise durch Vergleich der aus den Drehzahlmesswerten 13 hergeleiteten Radgeschwindigkeit mit einer (errechneten) Fahrzeugreferenzgeschwindigkeit erfolgen. Wird über den so ermittelten Radschlupf eine Blockiertendenz des Rades erkannt, das heißt, eine Schlupfgrenze ist erreicht oder überschritten, übernimmt die Bremssteuereinheit die Kontrolle über die Einstellung des Bremsdrucks. Die Bremssteuereinheit 34 erzeugt hierzu elektrische Stellsignale 33 für die jeweiligen Drucksteuerventile 10.

Die Bremssteuereinheit 34 bestimmt außerdem einen Anhängerbremsdruck 14, welcher an einem pneumatischen Kupplungskopf 15 des Zugfahrzeugs 2 bereitgestellt ist. Hierzu erzeugt die Bremssteuereinheit 34 ein elektrisches Stellsignal 16, mit dem der Kupplungskopf 15 oder ein auf den Kupplungskopf 15 wirkendes Drucksteuerventil angesteuert wird. Das Stellsignal 16 veranlasst dabei die Bereitstellung des vorgesehenen Anhängerbremsdrucks 14 in der an den Kupplungskopf 15 angeschlossenen Bremsanlage 3 des Anhängefahrzeugs.

Die Radbremsen 8 jedes Rades 7 des Anhängefahrzeugs 4 sind an einen gemeinsamen Anhängerbremskreis 17 angeschlossen und sind daher mit dem Anhängerbremsdruck 14 beaufschlagbar, welcher von der Bremssteuereinheit 34 des Zugfahrzeugs 2 einstellbar ist.

Jedem Rad 7 des Anhängefahrzeugs 4 ist ein Radmodul 18 zugeordnet. Jedes Radmodul 18 umfasst einen an die Drehbewegung des jeweiligen Rades 7 gekoppelten Beschleunigungssensor 19. Derartige Beschleunigungssensoren sind für sich grundsätzlich bekannt. Zur Kopplung des Beschleunigungssensors 19 an die radiale und/oder tangentiale Beschleunigung des Rades 7 ist das Radmodul 18 exzentrisch angeordnet. Hierzu ist das Radmodul 18 im Ausführungsbeispiel an dem äußeren Ring einer Felge 35 des Rades 7 montiert. Die Darstellung in Fig. 1 ist nicht maßstabsgetreu zu verstehen. Das Radmodul 18 ist zur Verbesserung der Verständlichkeit des Montageprinzips in einem vergrößerten Ausschnitt dargestellt.

Jedes Radmodul weist außerdem eine Sendeeinrichtung 20 zum drahtlosen Versenden eines Informationssignals 21 auf. Der Bremssteuereinheit 34 des Zugfahrzeugs 2 ist ein Empfänger 22 zugeordnet, welcher zum Empfang von lnformationssignalen 21 der Radmodule 18 ausgebildet ist. Die empfangenen lnformationssignale 21 werden der Bremssteuereinheit 34 eingegeben, welche dazu ausgebildet ist, den Anhängerbremsdruck 14 in Abhängigkeit der empfangenen lnformationssignale 21 einzustellen.

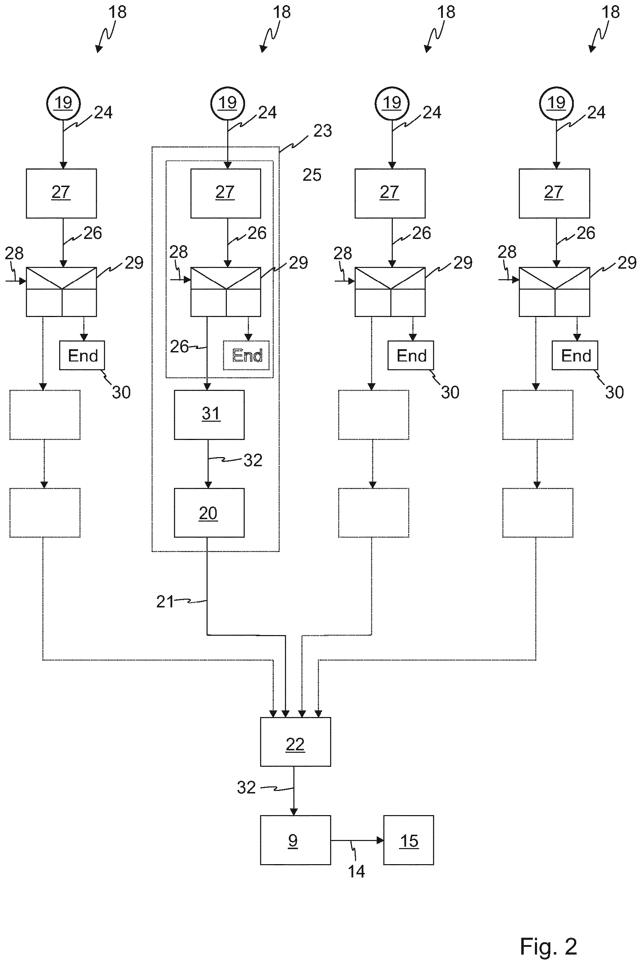

Die Radmodule 18 umfassen schließlich eine Modulelektronik (Bezugszeichen 23 in Fig. 2), welche zur Erzeugung eines Informationssignals 21 ausgebildet ist.

Im gezeigten Ausführungsbeispiel ist der Empfänger 22 im Zugfahrzeug 2 angeordnet, so dass der Empfänger 22 drahtlos die Informationssignale 21 aller Radmodule 18 des gesamten Fahrzeugkombination 5 erfasst und der Bremssteuereinheit 34 des Zugfahrzeugs 2 zur entsprechenden Einstellung des Anhängerbremsdrucks 14 vorgibt. In weiteren Ausführungsbeispielen ist jeweils ein Empfänger zum Zusammenwirken mit den Radmodulen in dem jeweiligen Anhängefahrzeug 4 angeordnet, wobei der Empfänger mit einem Zentralmodul gekoppelt ist, welches seinerseits die empfangenen Informationssignale 21 oder ein davon ausgewähltes Informationssignal 21 an die Bremssteuereinheit 34 des Zugfahrzeugs 2 weiterleitet, beispielsweise über eine Signalleitung wie CAN oder ebenfalls drahtlos.

Fig. 2 zeigt in einem Flussschaubild ein Verfahren zur Bereitstellung der Informationssignale 21 in jedem Radmodul 18 und Einstellung des Anhängerbremsdrucks 14 durch die Bremssteuereinheit 34 des Zugfahrzeugs. Jedes Radmodul 18 umfasst eine Modulelektronik 23, welche zur Erzeugung eines Informationssignals 21 unter Berücksichtigung der vom jeweiligen Beschleunigungssensor 19 ermittelten Beschleunigungsmesswerte 24 ausgebildet ist.

Die Beschleunigungsmesswerte 24 werden dabei einer Auswertungselektronik 25 bewertet, wobei aus den Beschleunigungsmesswerten 24 mit Hilfe entsprechender Algorithmen eine Blockiertendenz 26 des jeweiligen Rades ermittelt wird. Zur Ermittlung der Blockiertendenz 26 aus den Beschleunigungsmesswerten werden Algorithmen aus dem Bereich der Antiblockiersysteme herangezogen. Die Auswertungselektronik 25, welche eine Bewertung 27 der Beschleunigungsmesswerte 24 zur Bestimmung beziehungsweise Schätzung von Blockiertendenzen 26 ausführt, ist im gezeigten Ausführungsbeispiel integraler Bestandteil der Modulelektronik 23. In weiteren Ausführungsbeispielen wird die Bewertung 27 durch externe Elektronikbausteine, beispielsweise in der Peripherie oder als Teil der Bremssteuereinheit 34, ausgeführt.

Die intern im Radmodul 18 ermittelte Blockiertendenz 26 des jeweiligen Rades wird mit einer Vorgabe 28 verglichen (Vergleich 29), welche insbesondere ein Schwellwert, beziehungsweise mehrere Schwellwerte sind. Dabei ist eine Radschlupf-Schwelle vorgegeben, bei deren Überschreiten die Situation indiziert ist, dass das betreffende Rad sich tief im Schlupf befindet oder bereits blockiert, so dass der Blockierneigung entgegengewirkt werden sollte. in einem weiteren Ausführungsbeispiel ist alternativ oder zusätzlich eine negative Radbeschleunigung als Schwelle vorgesehen, welche die Situation repräsentiert, dass das betreffende Rad "abstürzt". In einer weiteren Möglichkeit ist eine positive Radbeschleunigung als Schwelle vorgegeben, welche die Situation indiziert, dass das betreffende Rad wieder anläuft.

Ergibt sich beim Vergleich 29 des ermittelten Wertes einer Blockiertendenz 26 ein Erreichen oder Überschreiten der Vorgabe 28, beispielsweise einer Radschlupf-Schwelle, wird die Ausgabe eines Informationssignals 21 durch die Sendeeinrichtung 20 veranlasst. Das Radmodul 18 sendet daher ausschließlich dann ein Informationssignal 21, wenn im Rahmen des Vergleichs 29 der ermittelten Blockiertendenz 26 mit der Vorgabe 28 Handlungsbedarf erkannt wurde. Solange die ermittelte Blockiertendenz 26 unterhalb der Vorgabe 28 liegt, wird kein Informationssignal 21 erzeugt und gesendet, was im Schaubild durch den Zustand 30 repräsentiert ist.

Im gezeigten Ausführungsbeispiel erfolgt auf der Grundlage der Blockiertendenz 26 eine Ermittlung 31 eines Druckveränderung 32 des aktuell eingestellten Anhängerbremsdrucks 14, welche von der Bremssteuereinheit 34 über das Informationssignal 21 angefordert werden soll. Anders ausgedrückt erzeugt das Radmodul 18 ein Informationssignal 21 mit der quantitativen Information einer gewünschten Druckveränderung 32 des Anhängerbremsdrucks. Inhaltlich ist die angeforderte Druckveränderung 32 eine qualitativ bestimmte Angabe zur Änderung des Anhängerbremsdrucks 14, also eine Erhöhung oder Senkung des Anhängerbremsdrucks. Alternativ bestimmen die Radmodule 18 einen gewünschten Anhängersollbremsdruck, welcher als Inhalt des Informationssignals 21 der Bremssteuereinheit 18 des Zugfahrzeugs 2 mitgeteilt wird.

Das Informationssignal 21 wird drahtlos von der Sendeeinrichtung 20 gesendet und nach Empfang durch den Empfänger 22 der Bremssteuereinheit 34 vorgegeben. Entsprechend der angeforderten Druckänderung 32 oder dem gewünschten Anhängersollbremsdruck stellt die Bremssteuereinheit 34 den Anhängerbremsdruck 14 am Kupplungskopf 15 ein.

In einem weiteren, nicht gezeigten, Ausführungsbeispiel sind in das Radmodul 18 Funktionen zur Überprüfung des Reifendrucks und zur Messung beziehungsweise Überwachung der Radgeschwindigkeiten integriert.

Jedes Radmodul 18 des Anhängefahrzeugs 4 meldet der Bremssteuereinheit 34 eigenständig und aktiv den aufgrund des jeweils sensierten Verhaltens des ihm zugeordneten Rades 7 die "gewünschte" Druckänderung 32 des Anhängerbremsdrucks oder einen Bremssolldruck für das betreffende Rad 7. Liegen mehrere Informationssignale an der Bremssteuereinheit 34 vor, das heißt mehrere Radmodule 18 melden eine Blockiertendenz und fordern eine Anpassung des Anhängerbremsdrucks 14 um dem Blockieren entgegenzuwirken, so entscheidet die Bremssteuereinheit unter Berücksichtigung aller Informationssignale 21, das heißt aller vorliegenden und angeforderten Druckveränderungen 32 oder Anhängersollbremsdrücke, mit welchem Anhängerbremsdruck 14 das Anhängefahrzeug gebremst werden soll.

Der Anhängerbremsdruck wird vorzugsweise dynamisch gepulst. Hierbei wird bereits modulierter Anhängerbremsdruck an dem Kupplungskopf 15 des Zugsfahrzeugs 2 bereitgestellt, so dass ein zusätzliches Drucksteuerventil im Anhängefahrzeug 4 entbehrlich ist.

### Bezugszeichenliste (Teil der Beschreibung)

- 1.: Bremsanlage
- 2.: Zugfahrzeug
- 3.: Bremsanlage
- 4.: Anhängefahrzeug
- 5.: Fahrzeugkombination
- 6.: Rad
- 7.: Rad
- 8.: Radbremse
- 9.: Radbremse
- 10.: Drucksteuerventil
- 11.: Drehzahlsensor
- 12.: Polrad
- 13.: Drehzahlmesswert
- 14.: Anhängerbremsdruck
- 15.: Kupplungskopf
- 16.: Stellsignal
- 17.: Anhängerbremskreis
- 18.: Bremsmodul
- 19.: Beschleunigungssensor
- 20.: Sendeeinrichtung
- 21.: Informationssignal
- 22.: Empfänger
- 23.: Modulelektronik
- 24.: Beschleunigungsmesswert
- 25.: Auswertungselektronik
- 26.: Blockiertendenz
- 27.: Bewertung
- 28.: Vorgabe
- 29.: Vergleich
- 30.: Zustand
- 31.: Ermittlung
- 32.: Druckveränderung
- 33.: Stellsignal
- 34.: Elektronische Bremssteuereinheit
- 35.: Felge

## Patentansprüche

1. Verfahren zur Verzögerung eines Anhängefahrzeugs (4) in einer Fahrzeugkombination (5) mit Zugfahrzeug (2) und wenigstens einem Anhängefahrzeug (4), wobei Radbremsen (9) des Anhängefahrzeugs (4) über Anhängerbremsdruck (14) pneumatisch betätigt werden,
**dadurch gekennzeichnet, dass**
an einem oder mehreren Rädern (7) des Anhängerfahrzeugs (4) jeweils ein Radmodul (18) Beschleunigungsmesswerte (24) des Rades (7) ermittelt, die ermittelten Beschleunigungsmesswerte (24) durch eine Auswertungselektronik (25) des Radmoduls (18) bewertet und im Hinblick auf eine Blockiertendenz (26) des jeweiligen Rades (7) überwacht, die Blockiertendenz (26) des jeweiligen Rades (7) ermittelt, und der Bewertung (27) der Beschleunigungsmesswerte (24) und der dabei ermittelten Blockiertendenz (26) entsprechende Informationssignale (21) erzeugt und drahtlos sendet, wobei eine elektronische Bremssteuereinheit (34) bei Empfang des Informationssignals (21) eines Radmoduls (18) den Anhängerbremsdruck (14) unter Berücksichtigung des Informationssignals (21) einstellt.

2. Verfahren nach Anspruch 1,
**dadurch gekennzeichnet, dass**
das Radmodul (18) in Abhängigkeit der Bewertung (27) der Beschleunigungsmesswerte (24) eine zur Vermeidung eines Blockierens des jeweiligen Rades (7) erforderlichen Druckveränderung (32) des Anhängerbremsdrucks (14) bestimmt und über ein der gewünschten Druckveränderung (32) entsprechendes Informationssignal (21) bei der elektronischen Bremssteuereinheit (34) zur entsprechenden Einstellung des Anhängerbremsdrucks (14) anfordert.

3. Verfahren nach Anspruch 1 oder 2,
**dadurch gekennzeichnet, dass**
das jeweilige Radmodul (18) Informationssignale (21) nur im Fall der Ermittlung einer Blockiertendenz (26) sendet.

4. Verfahren nach einem der vorhergehenden Ansprüche,
**dadurch gekennzeichnet, dass**
die Beschleunigungsmesswerte (24) die Beschleunigung des jeweiligen Rades (7) in radialer und/oder in tangentialer Richtung umfasst.

5. Verfahren nach einem der vorhergehenden Ansprüche,
**dadurch gekennzeichnet, dass**
eine elektronische Bremssteuereinheit (34) eines Zugfahrzeugs (2) bei Empfang eines Informationssignals (21) eines Radmoduls (18) den Anhängerbremsdruck (14) für das Anhängefahrzeug (4) einstellt.

6. Verfahren nach einem der vorhergehenden Ansprüche,
**dadurch gekennzeichnet, dass**
ein Anhängerbremsdruck (14) für das Anhängefahrzeug (4), welcher auf die Radbremsen (9) des Anhängefahrzeugs (4) wirkt, an einem pneumatischen Kupplungskopf (15) eines Zugsfahrzeugs (2) bereitgestellt wird,

7. Radmodul zur Durchführung des Verfahrens nach einem der Ansprüche 1 bis 6, zur Anordnung an einem Rad (7) eines Anhängefahrzeugs (4) mit:
- einem an die radiale und/oder tangentiale Beschleunigung des Rades (7) gekoppelten Beschleunigungssensor (19),
- einer Modulelektronik (23), welche zur Bereitstellung eines Informationssignals (21) unter Berücksichtigung der vom Beschleunigungssensor (19) ermittelten Beschleunigungsmesswerte (24) ausgebildet ist,
- einer Sendeeinrichtung (20) zum drahtlosen Versenden des Informationssignals (21).

8. Radmodul nach Anspruch 7,
**dadurch gekennzeichnet, dass**
dem Radmodul (18) eine Auswertungselektronik (25) zugeordnet ist, welche dazu ausgebildet ist, die Beschleunigungsmesswerte (24) zu bewerten (27) und im Hinblick auf eine Blockiertendenz (26) des jeweiligen Rades (7) zu überwachen.

9. Radmodul nach Anspruch 8,
**dadurch gekennzeichnet, dass**
die Auswertungselektronik (25) Teil der Modulelektronik (23) ist und mit der Sendeeinrichtung (20) verbunden ist.

10. Fahrzeugkombination mit einem Zugfahrzeug (2) und wenigstens einem Anhängefahrzeug (4) mit jeweils einer pneumatisch betätigbaren Radbremse (8,9) pro Rad (6, 7), wobei das Zugfahrzeug (2) eine elektronische Bremssteuereinheit (34) zur Überwachung der Radbremsen (8) des Zugfahrzeugs (2) und einen pneumatischen Kupplungskopf (15) zur Bereitstellung eines Anhängerbremsdrucks (14) für die Radbremsen (9) des Anhängefahrzeugs (4) aufweist,
**dadurch gekennzeichnet, dass**
an einem oder mehreren Rädern (7) des Anhängefahrzeugs (4) ein Radmodul (18) nach einem der Ansprüche 7 bis 9 angeordnet ist und der elektronischen Bremssteuereinheit (34) des Zugfahrzeugs (2) ein Empfänger (22) zum Empfang von Informationssignalen (21) des mindestens einen Radmoduls (18) zugeordnet ist, wobei die elektronische Bremssteuereinheit (34) dazu ausgebildet ist, den Anhängerbremsdruck (14) in Abhängigkeit der Informationssignale (21) einzustellen.

11. Fahrzeugkombination nach Anspruch 10,
**dadurch gekennzeichnet, dass**
jedes Rad (7) des Anhängefahrzeugs (4) ein Radmodul (18) aufweist.

12. Fahrzeugkombination nach Anspruch 10 oder 11,
**dadurch gekennzeichnet, dass**
die Radbremsen (9) des Anhängefahrzeugs (4) aus einem gemeinsamen Anhängerbremskreis (17) mit einem Anhängerbremsdruck (14) beaufschlagbar sind.

13. Fahrzeugkombination nach einem der Ansprüche 10 bis 12,
**dadurch gekennzeichnet, dass**
das Zugfahrzeug (2) den Empfänger (22) zum Empfang von Informationssignalen (21) des mindestens einen Radmoduls (18) aufweist.

## Claims

1. Method for decelerating a trailer vehicle (4) in a vehicle combination (5) comprising a tractor vehicle (2) and at least one trailer vehicle (4), wherein wheel brakes (9) of the trailer vehicle (4) are actuated pneumatically via trailer brake pressure (14),
**characterized in that**
a respective wheel module (18) on one or more wheels (7) of the trailer vehicle (4) determines measured acceleration values (24) of the wheel (7), the determined measured acceleration values (24) are evaluated by evaluation electronics (25) of the wheel module (18) and are monitored with regard to a locking tendency (26) of the respective wheel (7), the locking tendency (26) of the respective wheel (7) is determined, and information signals (21) corresponding to the evaluation (27) of the measured acceleration values (24) and the determined locking tendency (26) are generated and wirelessly transmitted, wherein, upon receiving the information signal (21) from a wheel module (18), an electronic brake control unit (34) adjusts the trailer brake pressure (14), taking into account the information signal (21).

2. Method according to claim 1,
**characterized in that**
the wheel module (18) determines, as a function of the evaluation (27) of the measured acceleration values (24), a change in pressure (32) of the trailer brake pressure (14) that is necessary in order to avoid locking of the respective wheel (7), and, via an information signal (21) corresponding to the desired change in pressure (32), requests the electronic brake control unit (34) to adjust the trailer brake pressure (14) accordingly.

3. Method according to claim 1 or 2,
**characterized in that**
the respective wheel module (18) transmits information signals (21) only in the event that a locking tendency (26) is determined.

4. Method according to any one of the preceding claims, **characterized in that**
the measured acceleration values (24) comprise the acceleration of the respective wheel (7) in the radial and/or tangential direction.

5. Method according to any one of the preceding claims, **characterized in that**,
upon receiving an information signal (21) from a wheel module (18), an electronic brake control unit (34) of a tractor vehicle (2) adjusts the trailer brake pressure (14) for the trailer vehicle (4).

6. Method according to any one of the preceding claims, **characterized in that**
a trailer brake pressure (14) for the trailer vehicle (4), which acts on the wheel brakes (9) of the trailer vehicle (4), is provided at a pneumatic coupling head (15) of a tractor vehicle (2).

7. Wheel module for carrying out the method according to any one of claims 1 to 6, for arrangement on a wheel (7) of a trailer vehicle (4), the wheel module comprising:
- an acceleration sensor (19) coupled to the radial and/or tangential acceleration of the wheel (7),
- module electronics (23), which are designed to provide an information signal (21), taking into account the measured acceleration values (24) determined by the acceleration sensor (19),
- a transmitting device (20) for wirelessly transmitting the information signal (21).

8. Wheel module according to claim 7,
**characterized in that**
the wheel module (18) is assigned evaluation electronics (25), which are designed to evaluate (27) the measured acceleration values (24) and to monitor these with regard to a locking tendency (26) of the respective wheel (7).

9. Wheel module according to claim 8,
**characterized in that**
the evaluation electronics (25) are part of the module electronics (23) and are connected to the transmitting device (20) .

10. Vehicle combination comprising a tractor vehicle (2) and at least one trailer vehicle (4), each having one pneumatically actuatable wheel brake (8, 9) per wheel (6, 7), wherein the tractor vehicle (2) has an electronic brake control unit (34) for monitoring the wheel brakes (8) of the tractor vehicle (2) and a pneumatic coupling head (15) for providing a trailer brake pressure (14) for the wheel brakes (9) of the trailer vehicle (4),
**characterized in that**
a wheel module (18) according to any one of claims 7 to 9 is arranged on one or more wheels (7) of the trailer vehicle (4), and the electronic brake control unit (34) of the tractor vehicle (2) is assigned a receiver (22) for receiving information signals (21) from the at least one wheel module (18), wherein the electronic brake control unit (34) is designed to adjust the trailer brake pressure (14) as a function of the information signals (21).

11. Vehicle combination according to claim 10, **characterized in that**
every wheel (7) of the trailer vehicle (4) has a wheel module (18).

12. Vehicle combination according to claim 10 or 11, **characterized in that**
a trailer brake pressure (14) can be applied to the wheel brakes (9) of the trailer vehicle (4) from a common trailer brake circuit (17).

13. Vehicle combination according to any one of claims 10 to 12,
**characterized in that**
the tractor vehicle (2) has the receiver (22) for receiving information signals (21) from the at least one wheel module (18) .

## Revendications

1. Procédé destiné à la décélération d'une remorque (4) dans un ensemble de véhicules (5) avec véhicule tracteur (2) et au moins une remorque (4), dans lequel des freins de roue (9) de la remorque (4) sont actionnés pneumatiquement via une pression de freinage de remorque (14),
**caractérisé en ce que**
au niveau d'une ou plusieurs roues (7) de la remorque (4) un module de roue (18) respectif établit des valeurs mesurées d'accélération (24) de la roue (7), les valeurs mesurées d'accélération (24) établies sont estimées par un système électronique d'évaluation (25) du module de roue (18) et surveillées au vu d'une tendance de blocage (26) de la roue (7) respective, la tendance de blocage (26) de la roue (7) respective est établie, et des signaux d'information (21) qui correspondent à l'estimation (27) des valeurs mesurées d'accélération (24) et de la tendance de blocage (26) ainsi établie sont produits et envoyés sans fil, dans lequel une unité de commande de freinage (34) électronique règle, à réception du signal d'information (21) d'un module de roue (18), la pression de freinage de remorque (14) en tenant compte du signal d'information (21).

2. Procédé selon la revendication 1,
**caractérisé en ce que**
le module de roue (18) détermine, en fonction de l'estimation (27) des valeurs mesurées d'accélération (24), une modification de pression (32), de la pression de freinage de remorque (14), requise pour éviter un blocage de la roue (7) respective, et la demande, via un signal d'information (21) qui correspond à la modification de pression (32) souhaitée, du côté de l'unité de commande de freinage (34) électronique pour un réglage correspondant de la pression de freinage de remorque (14).

3. Procédé selon la revendication 1 ou 2,
**caractérisé en ce que**
le module de roue (18) respectif envoie des signaux d'information (21) uniquement dans le cas où une tendance de blocage (26) a été établie.

4. Procédé selon l'une des revendications précédentes, **caractérisé en ce que**
les valeurs mesurées d'accélération (24) comprennent l'accélération de la roue (7) respective dans la direction radiale et/ou tangentielle.

5. Procédé selon l'une des revendications précédentes, **caractérisé en ce que**
une unité de commande de freinage (34) électronique d'un véhicule tracteur (2) règle, à réception d'un signal d'information (21) d'un module de roue (18), la pression de freinage de remorque (14) pour la remorque (4).

6. Procédé selon l'une des revendications précédentes, **caractérisé en ce que**
une pression de freinage de remorque (14) pour la remorque (4), laquelle pression de freinage agit sur les freins de roue (9) de la remorque (4), est mise à disposition au niveau d'une tête d'accouplement (15) pneumatique d'un véhicule tracteur (2).

7. Module de roue destiné à réaliser le procédé selon l'une des revendications 1 à 6, pour un agencement au niveau d'une roue (7) d'une remorque (4) avec :
- un capteur d'accélération (19) couplé à l'accélération radiale et/ou tangentielle de la roue (7),
- un système électronique de module (23), lequel est conçu pour mettre à disposition un signal d'information (21) en tenant compte des valeurs mesurées d'accélération (24) établies par le capteur d'accélération (19),
- un équipement d'envoi (20) pour l'envoi sans fil du signal d'information (21).

8. Module de roue selon la revendication 7,
**caractérisé en ce que**
au module de roue (18) est attribué un système électronique d'évaluation (25), lequel est conçu pour estimer (27) les valeurs mesurées d'accélération (24) et les surveiller au vu d'une tendance de blocage (26) de la roue (7) respective.

9. Module de roue selon la revendication 8,
**caractérisé en ce que**
le système électronique d'évaluation (25) fait partie du système électronique de module (23) et est relié à l'équipement d'envoi (20).

10. Ensemble de véhicules avec un véhicule tracteur (2) et au moins une remorque (4) avec respectivement un frein de roue (8, 9) qui peut être actionné pneumatiquement par roue (6, 7), dans lequel le véhicule tracteur (2) présente une unité de commande de freinage (34) électronique pour surveiller les freins de roue (8) du véhicule tracteur (2) et une tête d'accouplement (15) pneumatique pour mettre à disposition une pression de freinage de remorque (14) pour les freins de roue (9) de la remorque (4),
**caractérisé en ce que**
un module de roue (18) selon l'une des revendication 7 à 9 est agencé au niveau d'une ou plusieurs roues (7) de la remorque (4) et un récepteur (22) est attribué à l'unité de commande de freinage (34) électronique du véhicule tracteur (2) pour recevoir des signaux d'information (21) du au moins un module de roue (18), dans lequel l'unité de commande de freinage (34) électronique est conçue pour régler la pression de freinage de remorque (14) en fonction des signaux d'information (21).

11. Ensemble de véhicules selon la revendication 10, **caractérisé en ce que**
chaque roue (7) de la remorque (4) présente un module de roue (18).

12. Ensemble de véhicules selon la revendication 10 ou 11,
**caractérisé en ce que**
les freins de roue (9) de la remorque (4) issus d'un circuit de freinage de remorque (17) commun sont sollicités avec une pression de freinage de remorque (14).

13. Ensemble de véhicules selon l'une des revendications 10 à 12,
**caractérisé en ce que**
le véhicule tracteur (2) présente le récepteur (22) pour recevoir des signaux d'information (21) du au moins un module de roue (18).
